# EUROPEAN PATENT APPLICATION

(11) **EP 4 439 779 A2**
(43) Date of publication of application: **02.10.2024**
(21) Application number: 24165706.3
(22) Date of filing: 22.03.2024
(51) Int. Cl.: H01M 10/42, H01M 50/519

(54) **PORTABLE BATTERY PACK HAVING IMPROVED HEAT DISSIPATION STRUCTURE**

(30) Priority: 26.03.2023 KR 20230039347; 21.07.2023 KR 20230095481
(71) Applicant: Samsung SDI Co., Ltd., Yongin-si, Gyeonggi-do 17084 (KR)
(72) Inventor: CHOI, Jiyun, 17084 Yongin-si (KR)
(74) Representative: Marks & Clerk LLP

(57) **Abstract**

A portable battery pack including: a battery cell; a protection circuit module electrically connected to the battery cell; a protective pad attached to a surface of the protection circuit module and including an electrically insulating material; and a top tape attached to a top surface of the protective pad. A plurality of uneven structures are formed on the top surface of the protective pad.

## Description

### BACKGROUND

### 1. Field

Aspects of embodiments of the present disclosure relate to a portable battery pack having an improved heat dissipation structure.

### 2. Description of the Related Art

Secondary batteries are designed to be repeatedly charged and discharged. Secondary batteries have been widely used to power portable electronic devices. For example, secondary batteries may be widely used to power portable electronic devices, such as smart phones, laptop computers, camcorders, etc. Secondary batteries for powering portable electronic devices generally have lower capacities than large-capacity batteries used to power electric vehicles, etc.

Generally, low-capacity battery packs are referred to as hand-held product battery packs, which may be simply referred to as HHP battery packs. An HHP battery pack includes a pouch-type housing in which a battery cell, including a cathode material, an anode material, a separator, and an electrolyte, is arranged, and a protection circuit module (PCM) is installed at a terminal of the housing. The PCM is a controller that is configured to control charging/discharging of the battery cell. The PCM may be manufactured in the form of a printed circuit board.

During charging/discharging of the HHP battery, a large amount of heat is typically generated in the PCM. If the heat generated in the PCM is not properly dissipated, fire may occur in the battery and/or the battery cell may be damaged. Generally, a protective pad is attached on a top surface of the PCM along with a synthetic resin foam, such as polyurethane, or a rubber material for electric insulation of the PCM and protection from physical shock. The surface of the protective pad is sealed with a top tape. The protective pad has superior electric insulation but has relatively low thermal conductivity, thereby making it difficult to provide effective heat dissipation from the PCM.

### SUMMARY

Embodiments of the present disclosure provide a battery pack that can effectively dissipate heat generated in a protection circuit module (PCM) by using an improved structure including a protective pad for insulation and protection of the PCM of a hand-held product (HHP) battery pack.

Additional aspects and features of the present disclosure will be set forth, in part, in the description which follows and, in part, will be apparent from the description or may be learned by practice of the described embodiments of the present disclosure.

According to an embodiment of the present disclosure, a hand-held product (HHP) (i.e. portable) battery pack includes: a battery cell; a protection circuit module electrically connected to the battery cell; a protective pad attached to a surface of the protection circuit module and including an electrically insulating material; and a top tape attached to a top surface of the protective pad. A plurality of uneven structures are formed on the top surface of the protective pad.

In a plan view, the uneven structures may be in a stripe form.

The uneven structures may include a protrusion portion, and an upper end of the protrusion portion may be the top surface of the protective pad.

The uneven structures may include concave portions, and depths of the concave portions may be the same as each other.

The uneven structures may include concave portions, and a depth of a first one of the concave portions may be different from a depth of a second one of the concave portions.

In a plan view, the plurality of uneven structures may be arranged in a checker board pattern.

The uneven structures may include a protrusion portion, and a cross-section of the protrusion portion may be rectangular.

The uneven structures may include a protrusion portion, and a cross-section of the protrusion portion may be circular.

The protective pad may include a polyurethane material.

The protective pad may include a rubber material.

At least some of the above and other features of the invention are set out in the claims.

### BRIEF DESCRIPTION OF THE DRAWINGS

The above and other aspects features of the present disclosure will be more apparent from the following description, taken in conjunction with the accompanying drawings, in which:
FIG. 1 shows an overall structure of a hand-held product (HHP) battery pack according to embodiments of the present disclosure;
FIG. 2 is a schematic cross-sectional view taken along the line II-II in FIG. 1;
FIG. 3 shows a protection circuit module of the battery pack shown in FIG. 1;
FIG. 4 shows a protective pad according to embodiments of the present disclosure;
FIG. 5 is a cross-section view of the protective pad taken along the line V-V in FIG. 4;
FIG. 6 is a cross-section view of a protective pad according to other embodiments of the present disclosure;
FIG. 7 is a top view of a protective pad according to embodiments of the present disclosure; and
FIG. 8 is a top view of a protective pad according to other embodiments of the present disclosure.

### DETAILED DESCRIPTION

Reference will now be made, in detail, to embodiments of the present disclosure, examples of which are illustrated in the accompanying drawings. The described embodiments may have different forms and should not be construed as being limited to the descriptions set forth herein. Accordingly, embodiments are merely described below, by referring to the figures, to explain aspects and features of the present description.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

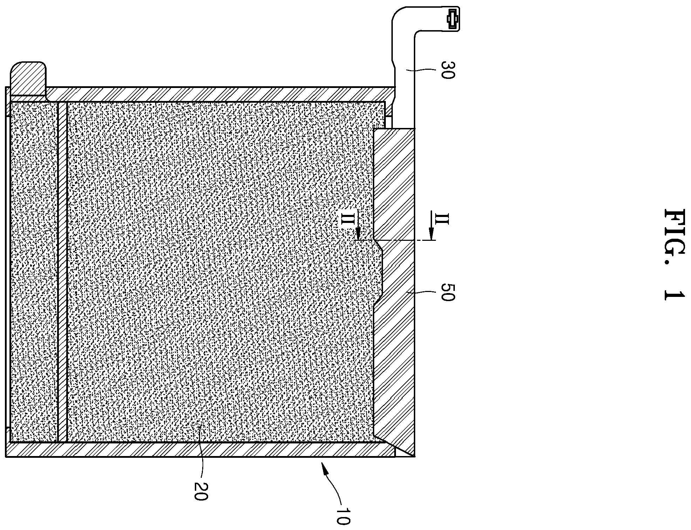

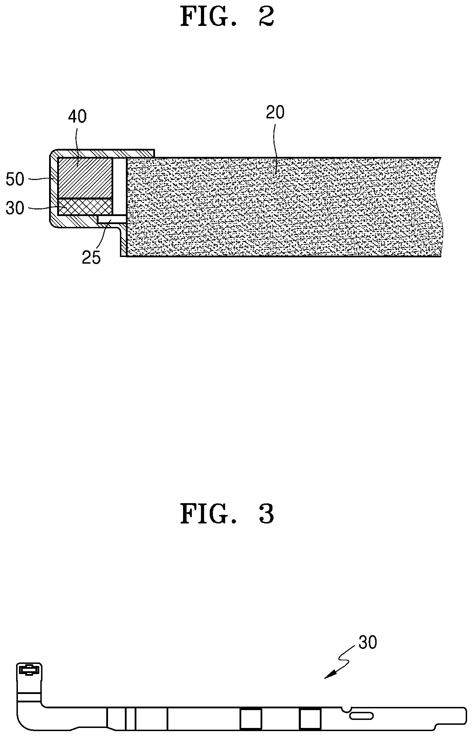

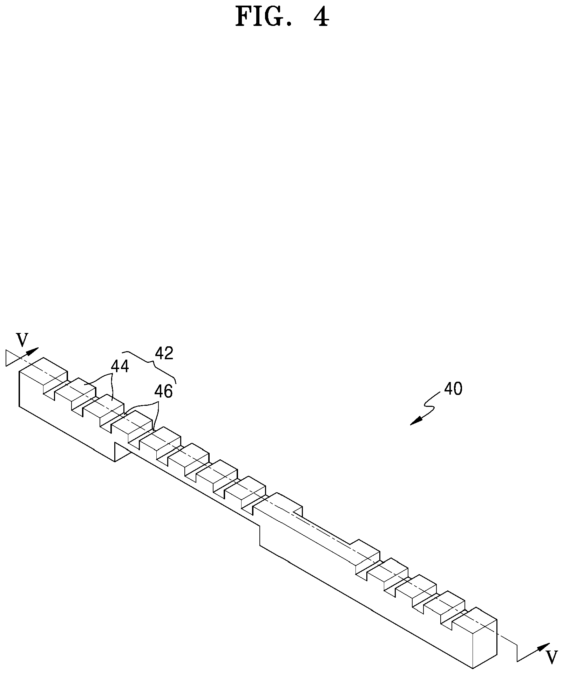

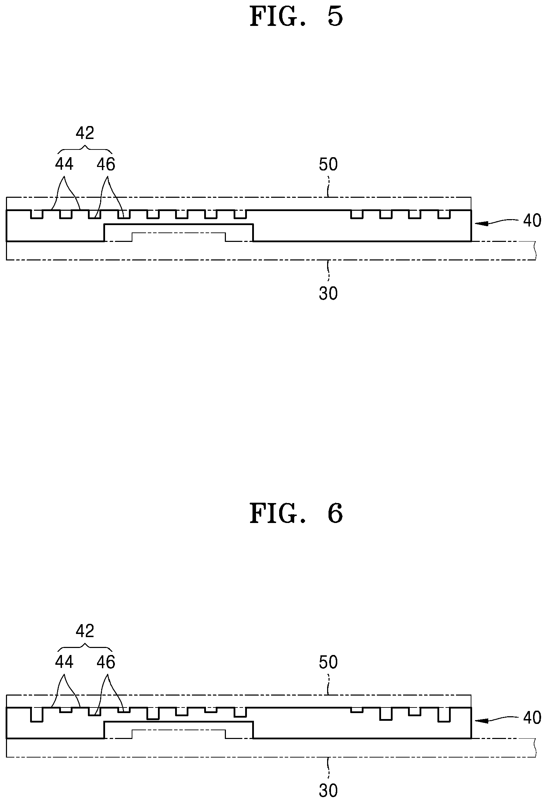

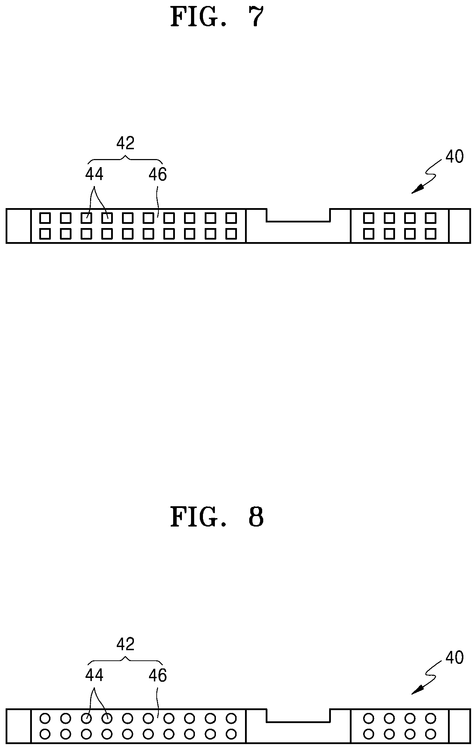

FIG. 1 shows an overall structure of a hand-held product (HHP) battery pack according to embodiments of the present disclosure. FIG. 2 is a schematic cross-sectional view taken along the line II-II in FIG. 1. FIG. 3 shows a protection circuit module of the battery pack shown in FIG. 1. FIG. 4 is a perspective view of a protective pad according to embodiments of the present disclosure. FIG. 5 is a cross-sectional view of the protective pad taken along the line V-V in FIG. 4. FIG. 6 is a cross-sectional view of a protective pad according to other embodiments of the present disclosure. FIG. 7 is a top view of a protective pad according to embodiments of the present disclosure. FIG. 8 is a top view of a protective pad according to other embodiments of the present disclosure.

Referring to FIGS. 1 to 8, a hand-held product (HHP) battery pack 10 (hereinafter, referred to as a "battery pack") having an improved heat dissipation structure according to embodiments of the present disclosure includes a battery cell 20, a protection circuit module 30, a protective pad 40, and a top tape 50.

The battery cell 20 may be installed in a pouch-type housing. The battery cell 20 may include a cathode material, an anode material, a separator, and an electrolyte. The battery cell 20 may employ a known structure.

The protection circuit module 30 is a circuit device electrically connected to the battery cell 20. For example, the protection circuit module 30 may be electrically connected to the battery cell 20 via an electric terminal 25 included in the battery cell 20. The protection circuit module 30 may include a plurality of electronic elements mounted on a printed circuit board (PCB). The protection circuit module 30 may be a battery controller configured to control charging and discharging of the battery cell 20. The protection circuit module 30 may generate heat during charging and discharging of the battery cell 20.

The protective pad 40 is a structure attached to a surface of the protection circuit module 30. The protective pad 40 may be manufactured with (e.g., may include or may be formed of) a material having superior electric insulation. The protective pad 40 may include a material having good impact-absorbing property to protect the protection circuit module 30 from physical shock that may be applied to the protection circuit module 30. The protective pad 40 may include a polyurethane resin foam or rubber. As the material of the protective pad 40, PORON° foam (an open cell urethane foam) may be used. PORON^{®} is a registered trademark of Rogers Corporation. A polyurethane-based foaming resin may also be used.

The top tape 50 may be an adhesive tape attached to the surface of the protective pad 40. The top tape 50 may enclose and seal the protection circuit module 30 and the protective pad 40. The top tape 50 may be relatively thin so as to not significantly disturb (or impede) dissipation of heat generated in the protection circuit module 30.

A plurality of uneven structures 42 are formed on (or in) the top surface of the protective pad 40.

The uneven structures 42 may be provided to improve dissipation of heat generated in the protection circuit module 30 into the air. The uneven structures 42 may be an empty space (e.g., an opening, hole, or groove) between the top tape 50 and the protective pad 40. The empty space formed by the uneven structures 42 may improve heat exchange with air (e.g., may increase surface area to improve heat exchange with the air). Thus, the uneven structures 42 may act as heat exchange fins. A concave portion 46 of the uneven structure 42 may increase (e.g., may double) a heat dissipation effect by shortening a heat transfer path from the protection circuit module 30 to the air.

As shown in FIG. 4, in a perspective view, the uneven structures 42 may be arranged in the form of a stripe. Each uneven structure 42 may include a protrusion portion 44 and a concave portion 46. The protrusion portion 44 may protrude upwardly from the concave portion 46. The concave portion 46 may be recessed concavely from the top surface of the protective pad 40. An upper end of the protrusion portion 44 may form the top surface of the protective pad 40. A depth of the concave portion 46 of the uneven structure 42 may be maintained constant as shown in the cross-sectional view of FIG. 5, which is taken along the line V-V in FIG. 4. In other words, a lower end (e.g., a bottom) of each of the concave portions 46 may be formed at the same height. According to other embodiments, for example, as shown in FIG. 6, a depth of the concave portions 46 of the uneven structure 42 may be different from each other. According to embodiments, a height of the lower end of the concave portion 46 may be different.

According to embodiments, as shown in FIG. 7, in a plan (or top) view, the uneven structures 42 may be arranged in the form of a checker board (e.g., may be formed in a two-dimensional matrix). The protrusion portions 44 may be arranged in the form of a checker board on (e.g., to extend from) the concave portion 46. Moreover, as shown in FIG. 7, a cross-section of the protrusion portion 44 of the uneven structure 42 may be rectangular. According to other embodiments, however, as shown in FIG. 8, for example, the cross-section of the protrusion portion 44 of the uneven structure 42 may be circular. The protrusion portion 44 may be arranged in the form of a checker board on the concave portion 46.

Hereinbelow, an effect of the battery pack 10 including the above-described components will be described, in detail, along with a dissipation path of the heat generated in the protection circuit module 30.

Referring to the structure shown in FIG. 2, when the battery cell 20 is repeatedly charged and discharged, a large amount of heat may occur in (or may be generated in) the protection circuit module 30. The heat generated in the protection circuit module 30 may be transferred to the protective pad 40. The protective pad 40 may have a relatively low thermal conductivity (e.g., may have heat conduction that is much lower than that of metal). However, the plurality of uneven structures 42 formed on the top surface of the protective pad 40 may form an empty space between the protective pad 40 and the top tape 50 attached to the top surface of the protective pad 40. The empty space formed in the concave portion 46 of the uneven structure 42 may form an air layer. The heat of the protective pad 40 may be easily transferred to the air layer formed in the concave portion 46. When the air layer of the concave portion 46 is heated, heat exchange may occur with external air under the top tape 50. An interfacial surface between the protrusion portion 44 and the concave portion 46 may promote heat exchange by increasing a contact area with the air layer formed in the concave portion 46. Thus, the heat may be easily dissipated to the external air at the concave portion 46. As such, in the battery pack 10, according to embodiments of the present disclosure, heat may be easily transferred to outside of the battery pack 10 through the empty space formed by the uneven structure 42 of the protective pad 40, thereby effectively preventing overheating of the protection circuit module 30.

As described above, the battery pack according to embodiments of the present disclosure may quickly dissipate heat generated in the protection circuit module into the air because the heat is exchanged with the air layer formed between the top tape and the protective pad through the plurality of uneven structures formed on the top surface of the protective pad to be attached to the protection circuit module.

This disclosure has been described in detail with respect to embodiments thereof, but the present disclosure is not limited to the above embodiments.

The battery pack, according to embodiments of the present disclosure, may quickly dissipate heat generated in the protection circuit module into the air because the heat is exchanged with the air layer formed between the top tape and the protective pad through the plurality of uneven structures formed in the top surface of the protective pad to be attached to the protection circuit module.

It should be understood that the embodiments described herein should be considered in a descriptive sense and not for purposes of limitation. Descriptions of features or aspects within each embodiment should typically be considered as available for other similar features or aspects in other embodiments. While embodiments of the present disclosure have been described with reference to the figures, it will be understood by those of ordinary skill in the art that various changes in form and details may be made therein without departing from the scope of the present disclosure as defined by the following claims.

## Claims

1. A portable battery pack comprising:
a battery cell;
a protection circuit module electrically connected to the battery cell;
a protective pad attached to a surface of the protection circuit module and comprising an electrically insulating material; and
a top tape attached to a top surface of the protective pad,
wherein a plurality of uneven structures are formed on the top surface of the protective pad.

2. The portable battery pack as claimed in claim 1, wherein, in a plan view, the uneven structures are in a stripe form.

3. The portable battery pack as claimed in claim 1 or claim 2, wherein the uneven structures comprise a protrusion portion, and
wherein an upper end of the protrusion portion is the top surface of the protective pad.

4. The portable battery pack as claimed in any one of claims 1 to 3, wherein the uneven structures comprise concave portions, and
wherein depths of the concave portions are the same as each other.

5. The portable battery pack as claimed in any one of claims 1 to 3, wherein the uneven structures comprise concave portions, and
wherein a depth of a first one of the concave portions is different from a depth of a second one of the concave portions.

6. The portable battery pack as claimed in any one of claims 1 to 5, wherein, in a plan view, the plurality of uneven structures are arranged in a checker board pattern.

7. The portable battery pack as claimed in claim 6, wherein the uneven structures comprise a protrusion portion, and
wherein a cross-section of the protrusion portion is rectangular.

8. The portable battery pack as claimed in claim 6, wherein the uneven structures comprise a protrusion portion, and
wherein a cross-section of the protrusion portion is circular.

9. The portable battery pack as claimed in any one of claims 1 to 8, wherein the protective pad comprises a polyurethane material.

10. The portable battery pack as claimed in any one of claims 1 to 9, wherein the protective pad comprises a rubber material.
